# EUROPEAN PATENT APPLICATION

(11) **EP 4 692 451 A1**
(43) Date of publication of application: **11.02.2026**
(21) Application number: 24862974.3
(22) Date of filing: 24.06.2024
(51) Int. Cl.: D06F 58/22, B08B 1/32, B01D 35/16

(54) **LINT REMOVAL DEVICE AND CLOTHES DRYER INCLUDING SAME**

(30) Priority: 05.09.2023 KR 20230117977
(71) Applicant: Samsung Electronics Co., Ltd., Suwon-si, Gyeonggi-do 16677 (KR)
(72) Inventor: LIM, Hyeonkyu, Suwon-si Gyeonggi-do 16677 (KR); LEE, Hakjae, Suwon-si Gyeonggi-do 16677 (KR)
(74) Representative: Gulde & Partner
(86) International application number: PCT/KR2024/008660
(87) International publication number: WO 2025/053391

(57) **Abstract**

A clothes dryer includes a drum, an exhaust port through which air in the drum is discharged to outside of the drum, a first filter that is rotatable and is configured so that air discharged through the exhaust port passes through the first filter so as to be filtered by the first filter, a second filter configured so that the air passed through the first filter passes through the second filter so as to be filtered by the second filter, to thereby remove lint in air, and a motor configured to transmit power to the first filter to rotate the first filter. The first filter and the second filter are configured so that rotation of the first filter by the motor causes lint collected in the second filter to be removed from the second filter.

## Description

### [Technical Field]

The present disclosure relates to a clothes dryer including a lint removal device.

### [Background Art]

In general, a clothes dryer is a device for drying wet laundry placed in a drum by forcefully blowing hot air into the drum. Such a clothes dryer is basically similar to a drum washing machine in an appearance thereof, and may dry laundry by forcibly circulating hot air heated through a heater and a blowing fan into the drum.

In a process of operating the clothes dryer, the air discharged from the drum may contain lint. The air discharged from the drum passes through a heat exchanger and is circulated back into the drum, and thus it is necessary to remove lint in the air before circulation.

To this end, the clothes dryer may include a lint filter filtering out lint so as to prevent deterioration in drying performance of the clothes dryer by preventing the lint from being introduced to the heat exchanger, and a lint removal device including the same. Because lint may accumulate in the lint filter, it is necessary to remove the accumulated lint in order to prevent deterioration of the drying performance.

Recently, there has been a demand for a clothes dryer capable of preventing deterioration in drying performance by cleaning the lint filter without a user having to manually remove the lint accumulated in the lint filter.

### [Disclosure]

### [Technical Problem]

The present disclosure is directed to providing a clothes dryer capable of preventing deterioration in drying performance by including a lint filter and a lint removal device including the same.

The present disclosure is directed to providing a lint removal device capable of removing lint accumulated in a lint filter without user intervention, and a clothes dryer including the same.

Technical tasks to be achieved in this document are not limited to the technical task mentioned above, and other technical tasks not mentioned will be clearly understood by those skilled in the art from the description below.

### [Technical Solution]

In an aspect of the present disclosure a clothes dryer include a drum, an exhaust port through which air in the drum is discharged to outside of the drum, a first filter that is rotatable and is configured so that air discharged through the exhaust port passes through the first filter so as to be filtered by the first filter, a second filter configured so that the air passed through the first filter passes through the second filter so as to be filtered by the second filter, to thereby remove lint in the air, and a motor configured to transmit power to the first filter to rotate the first filter. The first filter and the second filter are configured so that rotation of the first filter by the motor causes lint collected in the second filter to be removed from the second filter.

In an aspect of the present disclosure a lint removal device including a first filter configured to filter out lint in air, a rotation member including a rotation shaft and a fin extending from the rotation shaft to scrape and collect lint collected in the lint filter, a second filter disposed downstream of the first filter to filter out lint in the air passed through the first filter, a cleaning member mounted on the first filter to protrude toward the second filter, and a motor configured to rotate the first filter so that the cleaning member removes lint collected in the second filter while the first filter is rotated.

In an aspect of the present disclosure a clothes dryer including a drum, an exhaust port through which air in the drum flows to the outside of the drum, and a lint removal device disposed downstream of the exhaust port to remove lint in air passed through the exhaust port, wherein the lint removal device includes a first filter disposed downstream of the drum and provided to be rotatable, a second filter disposed outside the first filter, a first cleaning member configured to clean the first filter, a second cleaning member configured to clean the second filter, and a motor configured to rotate at least one of the first filter and the rotation member, the first cleaning member is rotated to clean the first filter based on rotation of the motor in a first direction, and the second cleaning member is rotated to clean the second filter based on rotation of the motor in a second direction.

### [Description of Drawings]

FIG. 1 is a perspective view of a clothes dryer according to an embodiment.
FIG. 2 is a side cross-sectional view of the clothes dryer according to an embodiment.
FIG. 3 is a schematic diagram of the clothes dryer according to an embodiment.
FIG. 4 is a perspective view of the clothes dryer according to an embodiment.
FIG. 5 is an enlarged view of the clothes dryer illustrated in FIG. 4.
FIG. 6 a front view of the clothes dryer illustrated in FIG. 4.
FIG. 7 is a perspective view of a lint removal device in the clothes dryer according to an embodiment.
FIG. 8 is a perspective view of the lint removal device in the clothes dryer according to an embodiment.
FIG. 9 is an exploded perspective view of the lint removal device in the clothes dryer according to an embodiment.
FIG. 10 is an exploded perspective view of the lint removal device in the clothes dryer according to an embodiment.
FIG. 11 is a cross-sectional view of the lint removal device in the clothes dryer according to an embodiment.
FIG. 12 is a flowchart illustrating a sequence of operations of the lint removal device in the clothes dryer according to an embodiment.
FIG. 13 is an enlarged view of the lint removal device in the clothes dryer according to an embodiment.
FIG. 14 is an enlarged view of the lint removal device in the clothes dryer according to an embodiment.
FIG. 15 is an enlarged view of the lint removal device in the clothes dryer according to an embodiment.
FIG. 16 is an enlarged view of the lint removal device in the clothes dryer according to an embodiment.
FIG. 17 is a cross-sectional view of the lint removal device in the clothes dryer according to an embodiment.
FIG. 18 is an enlarged view of the lint removal device in the clothes dryer according to an embodiment.
FIG. 19 is an enlarged view of the lint removal device in the clothes dryer according to an embodiment.
FIG. 20 is an enlarged view of the lint removal device in the clothes dryer according to an embodiment.
FIG. 21 is an enlarged view of the lint removal device in the clothes dryer according to an embodiment.
FIG. 22 is a cross-sectional view of the lint removal device in the clothes dryer according to an embodiment.
FIG. 23 is a cross-sectional view of the lint removal device in the clothes dryer according to an embodiment.
FIG. 24 is a cross-sectional view of the lint removal device in the clothes dryer according to an embodiment.
FIG. 25 is a cross-sectional view of the lint removal device in the clothes dryer according to an embodiment.
FIG. 26 is a perspective view of the lint removal device in the clothes dryer according to an embodiment.
FIG. 27 is a cross-sectional view of the lint removal device in the clothes dryer according to an embodiment.
FIG. 28 is a perspective view of the lint removal device in the clothes dryer according to an embodiment.
FIG. 29 is a perspective view of the lint removal device in the clothes dryer according to an embodiment.

### [Mode of the Disclosure]

The embodiments described in the present specification and the configurations shown in the drawings are only examples of preferred embodiments of the present disclosure, and various modifications may be made at the time of filing of the present disclosure to replace the embodiments and drawings of the present specification.

Like reference numbers or signs in the various drawings of the application represent parts or components that perform substantially the same functions.

The terms used herein are for the purpose of describing the embodiments and are not intended to restrict and/or to limit the present disclosure. For example, the singular expressions herein may include plural expressions, unless the context clearly dictates otherwise. Also, the terms "comprises" and "has" are intended to indicate that there are features, numbers, steps, operations, components, parts, or combinations thereof described in the specification, and do not exclude the presence or addition of one or more other features, numbers, steps, operations, components, parts, or combinations thereof.

In the present disclosure, each of phrases such as "A or B," "at least one of A and B," "at least one of A or B," "A, B or C," "at least one of A, B and C," and "at least one of A, B, or C" may include any one of the items listed together in the corresponding one of the phrases, or all possible combinations thereof.

The term "and/or" includes any combination of a plurality of related components or any one of a plurality of related components.

It will be understood that, although the terms "first," "second," and the like may be used herein to describe various components, these components should not be limited by these terms, and the terms are only used to distinguish one component from another. For example, without departing from the scope of the present disclosure, a first component may be referred to as a second component, and similarly, the second component may also be referred to as a first component. The term "and/or" includes any combination of a plurality of related items or any one of a plurality of related items.

In the present disclosure, the meaning of 'identical' includes things that have similar properties or are similar within a certain range. Also, the 'identical' means 'substantial identical.' The meaning of 'substantial identical' should be understood to mean that a value corresponding to a difference within a range that do not have meaning with respect to a value corresponding to a value within the margin of error in manufacturing or a reference value is included in the scope of 'identical.'

In addition, terms such as "~unit," "~part," "~block," "~member," "~module," and the like may denote a unit for processing at least one function or operation. For example, the terms may refer to at least one hardware such as a field-programmable gate array (FPGA)/an application specific integrated circuit (ASIC), at least one software stored in a memory, or at least one process processed by a processor.

In this specification, the terms "front," "rear," "left," "right," and the like used in the following description are defined with reference to the drawings, and the shape and position of each component are not limited by these terms.

Hereinafter, embodiments of the present disclosure will be described in detail with reference to the accompanying drawings.

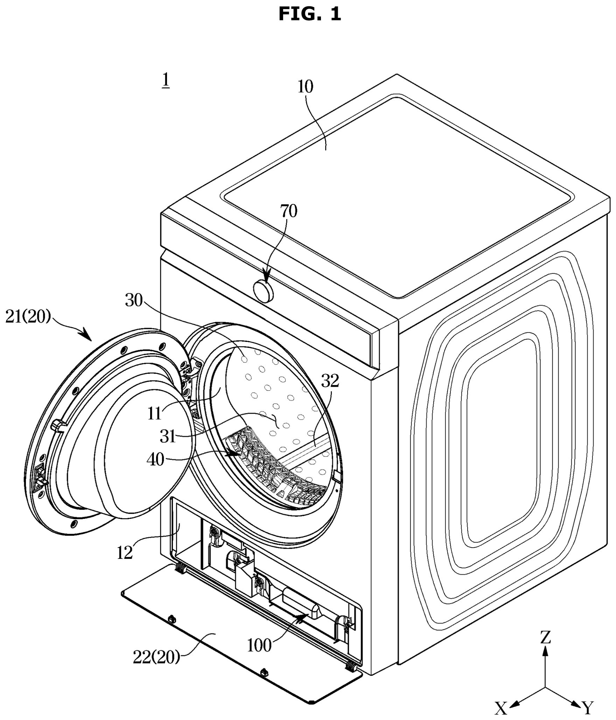

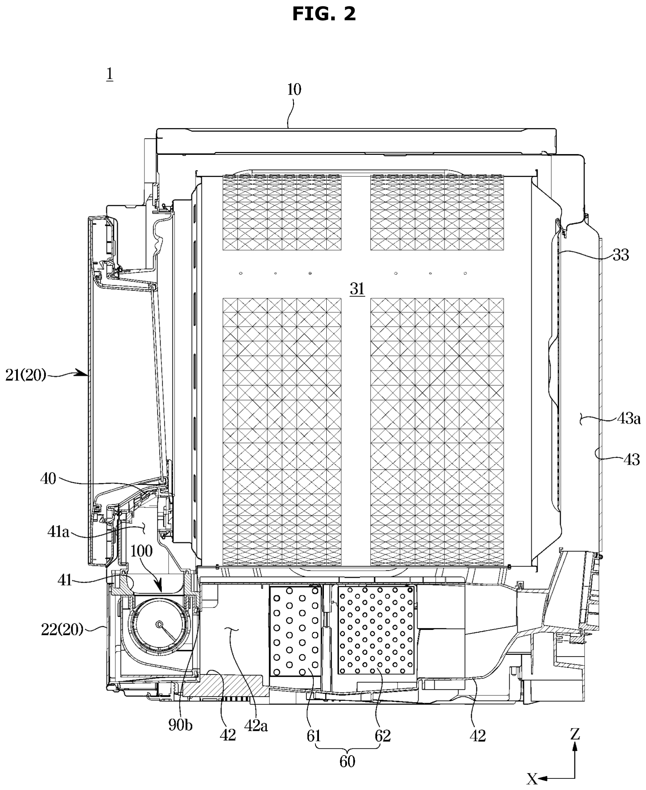

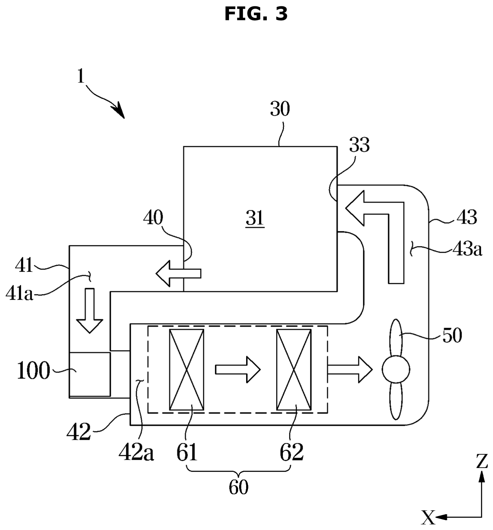

FIG. 1 is a perspective view of a clothes dryer according to an embodiment. FIG. 2 is a side cross-sectional view of the clothes dryer according to an embodiment. FIG. 3 is a schematic diagram of the clothes dryer according to an embodiment.

Referring to FIGS. 1 to 3, a dryer 1 refers to a device provided to dry clothes, etc. by supplying dry and high-temperature air into a drying chamber 31 and agitating objects to be dried accommodated within the drying chamber 31 using a driving force of a motor. Herein, in a case in which the objects to be dried are clothes, the dryer may be referred to as a clothes dryer or a clothes treating device.

The clothes dryer 1 may be an air circulating type clothes dryer. On the other hand, the present disclosure may also be applied to an air non-circulating type clothes dryer in which air does not circulate.

The clothes dryer 1 may include a cabinet 10 and a clothes inlet 11. The cabinet 10 is formed in a substantially rectangular shape, and the clothes inlet 11 may be formed in the front of the cabinet 10 to put clothes therein. The clothes inlet 11 may be formed to be open.

A user interface 70 including a touch panel may be provided above the clothes inlet 11. A controller may be provided at the rear of the user interface 70 inside the cabinet 10. A door 20 may be coupled to the front of the cabinet 10 through a hinge.

The door 20 may include a first door 21 and a second door 22. The first door 21 may be disposed above the second door 22. The first door 21 may open and close the clothes inlet 11. The first door 21 may be an upper door 6 or a clothes door 6.

The second door 22 may open and close an opening 12 formed in the front of the cabinet 10. A lint removal device 100 may be withdrawn and/or retracted through the opening 12. The second door 22 may be rotatably coupled to a lower end of the cabinet 10 to open and close the opening 12. The second door 22 may be a lower door.

A drum 30 accommodating clothes may be installed inside the cabinet 10. An opening may be formed in the front of the drum 30 to allow clothes to be put therein and taken therefrom. The opening of the drum 30 may be provided to correspond to the clothes inlet 11.

The drum 30 may be formed in a cylindrical shape. The drum 30 may be supported on the cabinet 10 to be rotatable about a rotation shaft extending in a front-rear direction.

An intake port 33 covered with a mesh filter may be formed at a rear end of the drum 30. High-temperature and low-humidity air passed through a heat exchanger 60 may flow into the drying chamber 31 through the intake port 33.

A lifter 32 may be provided on an inner surface of the drum 30. The lifter 32 may be formed integrally with the drum 30. However, the present disclosure is not limited thereto. During a drying cycle, the drum 30 may be rotationally driven by a drive motor (not shown).

The clothes dryer may include the heat exchanger 60, a blowing fan 50, and the lint removal device 100. The heat exchanger 60, the blowing fan 50, and the lint removal device 100 may be disposed below the cabinet 10. For example, the heat exchanger 60, the blowing fan 50, and the lint removal device 100 may be disposed within ducts 41, 42, and 43.

Accordingly, a sufficient installation space for the heat exchanger 60, the blowing fan 50, and the lint removal device 100 may be secured, and a large-sized and high-performance clothes dryer may be manufactured. In addition, because a center of gravity of the dryer moves downward, the clothes dryer 1 may be installed stably. Moreover, because the center of gravity is located below the drum 30, which generates vibration during the drying process, the effect of suppressing the vibration may be obtained.

In addition, as will be described later, because an air circulation path may be enlarged and simplified, pressure loss may be reduced by reducing air resistance, and air discharged from the drum 30 may be smoothly guided to the heat exchanger 60.

An exhaust port 40 through which air discharged from the drying chamber 31 inside the drum 30 passes is provided on a lower side of the clothes inlet 11. The exhaust port 40 may communicate with the inside of the ducts 41, 42, and 43. For example, the exhaust port 40 may communicate with a front flow path 41a formed inside the front duct 41. The lint removal device 100 may be disposed downstream of the front flow path 41a to collect and remove lint contained in the air discharged from the drying chamber 31.

According to an embodiment, the lint removal device 100 may be disposed on a front lower side of the cabinet 10. The lint removal device 100 may be disposed in the ducts 41, 42, and 43 through which the air discharged from the drum 30 flows. The lint removal device 100 may be disposed upstream of the heat exchanger 60 to prevent lint from accumulating in the heat exchanger 60 by removing the lint in the air passed through the drum 30.

The heat exchanger 60 may include an evaporator 61 and a condenser 62. The evaporator 61, the condenser 62, and the blowing fan 50 may be arranged in one direction. The evaporator 61 may be located upstream of the condenser 62 based on a flow of air. The air introduced into the ducts 41, 42, and 43 through the exhaust port 40 may be dried while passing through the evaporator 61, heated while passing through the condenser 62, and flow back to the drying chamber 31 through the intake port 33. The clothes dryer may include a compressor and an expander, and the compressor and the expander may be connected to the evaporator 61 and the condenser 62.

The clothes dryer may include the ducts 41, 42, and 43. A plurality of the ducts may be provided. The plurality of ducts 41, 42, and 43 may include the first duct 41, the second duct 42, and the third duct 43. The first duct 41 may be the front duct 41 disposed on a front side within the cabinet 10. The second duct 42 may be the lower duct 42 disposed between the first duct 41 and the third duct 43 below the drum 30 within the cabinet 10. The second duct 42 may be disposed between a lower end of the drum 30 and a bottom of the cabinet 10. The third duct 43 disposed on a rear side within the cabinet 10 may be the rear duct 43. The third duct 43 may be disposed between a rear wall of the cabinet 10 and the rear end of the drum 30. The first duct 41, the second duct 42, and the third duct 43 may be connected to each other. However, the first duct 41, the second duct 42, and the third duct 43 may be formed integrally to be provided as one duct.

The first duct 41 may form the first flow path 41a. Air containing lint passed through the drying chamber 31 may flow to the first flow path 41a. The air passed through the first flow path 41a may pass through the lint removal device 100. Lint may be removed from the air passing through the lint removal device 100 by the filter, and the air from which the lint has been removed may flow to a second flow path 42a. The first flow path 41a and the second flow path 42a may communicate and/or be connected. One end of the first flow path 41a may communicate with the exhaust port, and the other end of the first flow path 41a may communicate with an inner flow path of the lint removal device.

The second duct 42 may form the second flow path 42a. The heat exchanger 60 may be disposed within the second duct 42. The air from which the lint has been removed may change from low-temperature and high-humidity air to high-temperature and low-humidity air while passing through the heat exchanger 60 in the second flow path 42a. The second flow path 42a may form a portion of a machine room. The air passed through the heat exchanger 60 may flow to a third flow path 43a. The second flow path 42a and the third flow path 43a may communicate and/or be connected. One end of the second flow path 42a may communicate with an inner flow path 110a through a communication opening 90b of the lint removal device, and the other end of the second flow path 42a may communicate with the third flow path 43a.

The third duct 43 may form the third flow path 43a. The air introduced into the third flow path 43a may pass through the rear of the drum 30 and flow into the drying chamber 31 through the intake port 33. The third flow path 43a and the drying chamber 31 formed inside the drum may communicate and/or be connected. One end of the third flow path 43a may communicate with the second flow path 42a, and the other end of the third flow path 43a may communicate with the drying chamber 31.

The blowing fan 50 generates a flow of air from the exhaust port 40 toward the intake port 33 during the drying process. Accordingly, circulation of air passing through the drying chamber 31 inside the drum 30 may be formed. By the blowing fan 50, humid air may flow out of the drum 30 through the exhaust port 40, air which has become hot and dry through the heat exchanger 60 may be introduced into the drum 30 through the intake port 33.

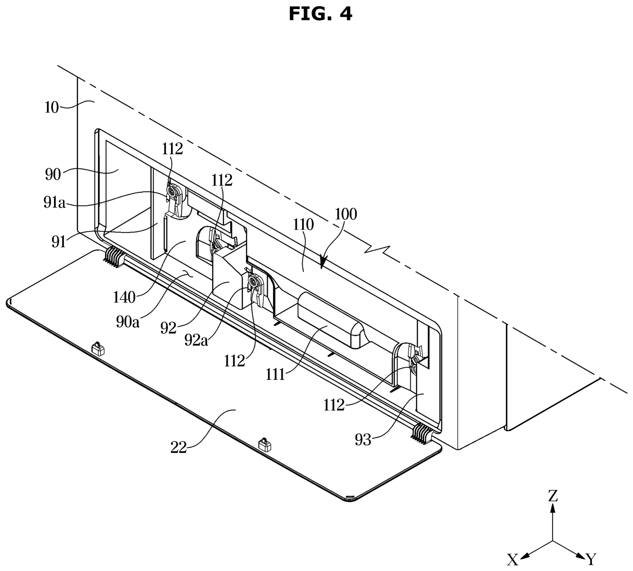

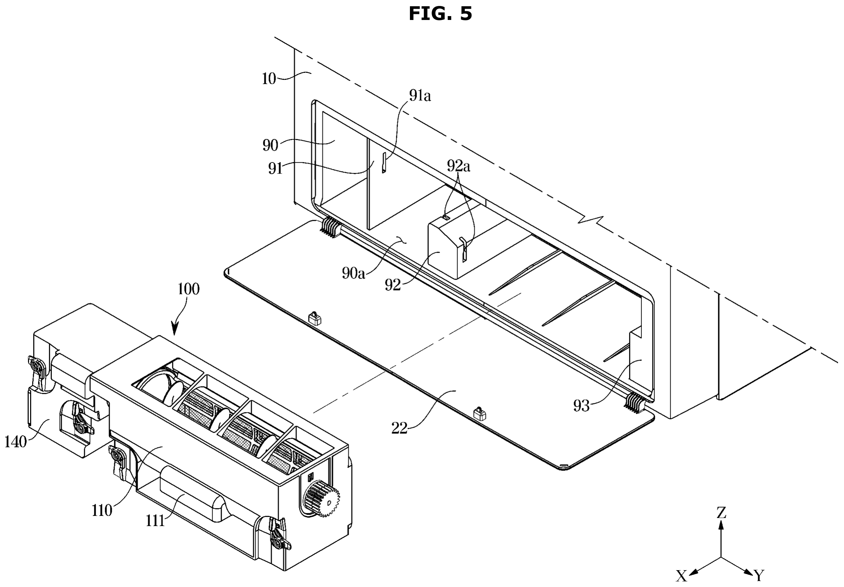

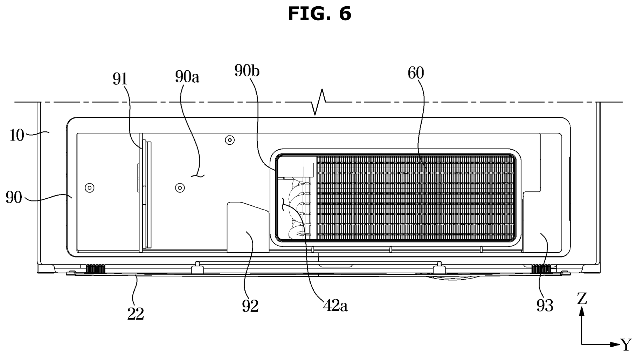

FIG. 4 is a perspective view of the clothes dryer according to an embodiment. FIG. 5 is an enlarged view of the clothes dryer illustrated in FIG. 4. FIG. 5 illustrates that the lint removal device is withdrawn from the cabinet. FIG. 6 a front view of the clothes dryer illustrated in FIG. 4.

Referring to FIGS. 4 to 6, the clothes dryer may further include a device case 90. The device case 90 is fixed within the cabinet 10 and may be disposed on the front lower side of the cabinet 10. The lint removal device 100 may be accommodated and disposed within the device case 90.

The device case 90 may include position guides 91, 92, and 93. The position guides 91, 92, and 93 may fix the lint removal device 100 disposed in the inner space 90a. The position guides 91, 92, 93 may include the guide wall 91. The guide wall 91 may be provided on a right side of the device case 90. The guide wall 91 may extend in an up-down direction within the device case 90. A guide hole 91a may be formed on the guide wall 91 to allow a fixing member 112 coupled to a lint box 140 to be inserted therein. The position guides 91, 92, and 93 may include the guide blocks 92 and 93. The guide blocks 92 and 93 may protrude from a lower end of the device case 90. The first guide block 92 may be provided at a middle portion of the device case 90. A guide hole 92a may be formed on the first guide block 92 to allow the fixing member 112 coupled to the lint box 140 and the fixing member 112 coupled to a housing 110 to be inserted therein. The second guide block 93 may be provided on a left side of the device case 90. A guide hole 93a may be formed on the second guide block 93 to allow the fixing member 112 coupled to the housing 110 to be inserted therein.

The lint removal device 100 may be withdrawn from and/or retracted into the inside of the cabinet 10 and the inside of the device case 90. The user may withdraw the lint removal device 100 using a handle 111 to manually remove lint in the lint box 140 or clean the filter. In addition, when the lint removal device 100 is separated from the cabinet 10, the heat exchanger 60 disposed inside the cabinet 10 may be cleaned through the communication opening 90b formed at the rear of the device case 90. However, a driving device may not be retracted from the inside of the cabinet 10.

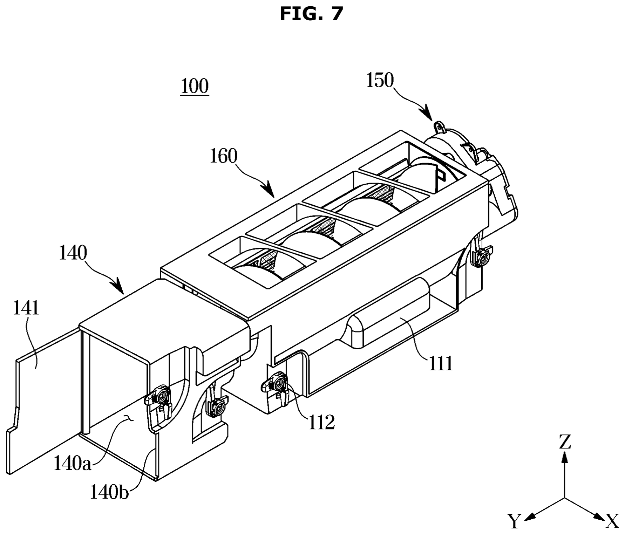

FIG. 7 is a perspective view of a lint removal device in the clothes dryer according to an embodiment.

Referring to FIG. 7, the lint box 140 of the lint removal device 100 may be opened and closed. For example, an inside 140a and an opening 140b of the lint box 140 may be opened and closed by a box door 141 rotatably coupled to a rear end of the lint box. The lint collected in the inside 140a of the lint box 140 may be discarded through the opening 140b opened by the box door 141.

The lint box 140 may be formed such that at least a portion thereof is transparent. For example, at least a portion of the lint box 140 may be made of a transparent material. Therefore, the user may figure out an amount of lint collected in the inside 140a of the lint box 140 without opening the box door 141, and may easily determine whether the lint box 140 should be emptied.

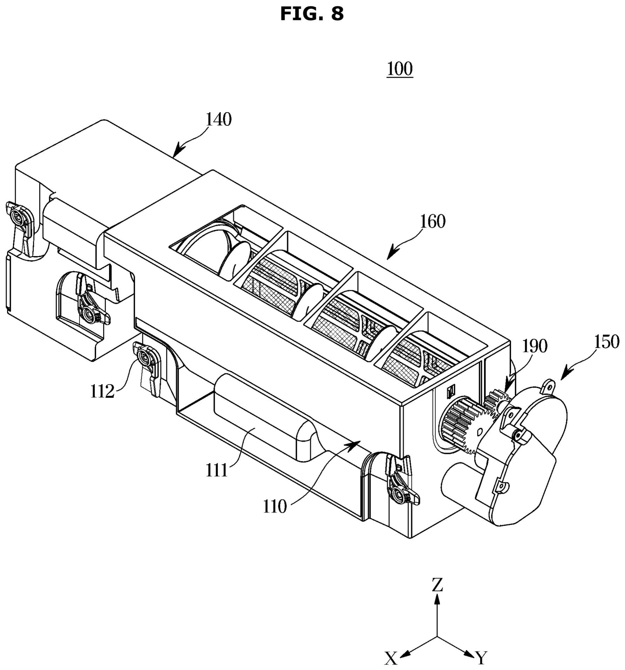

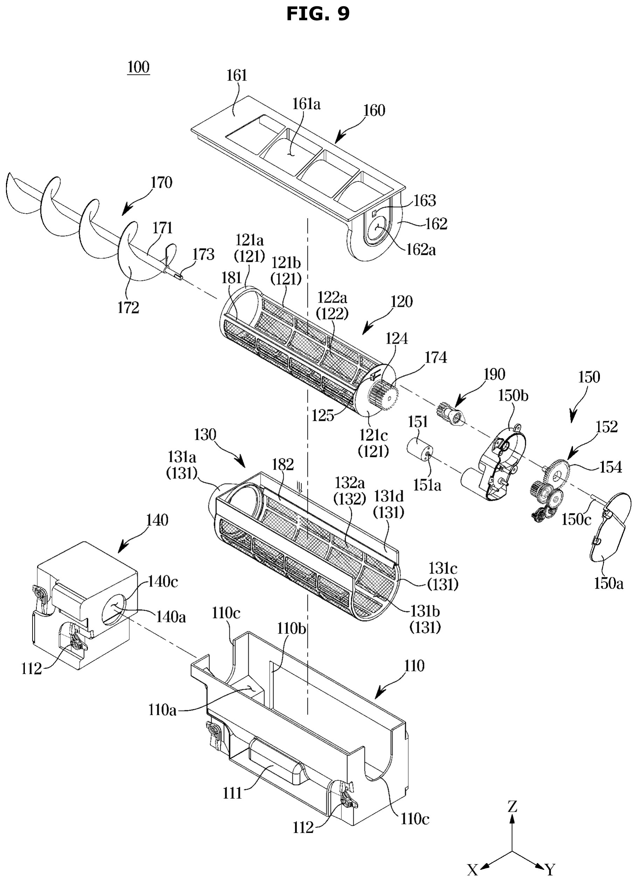

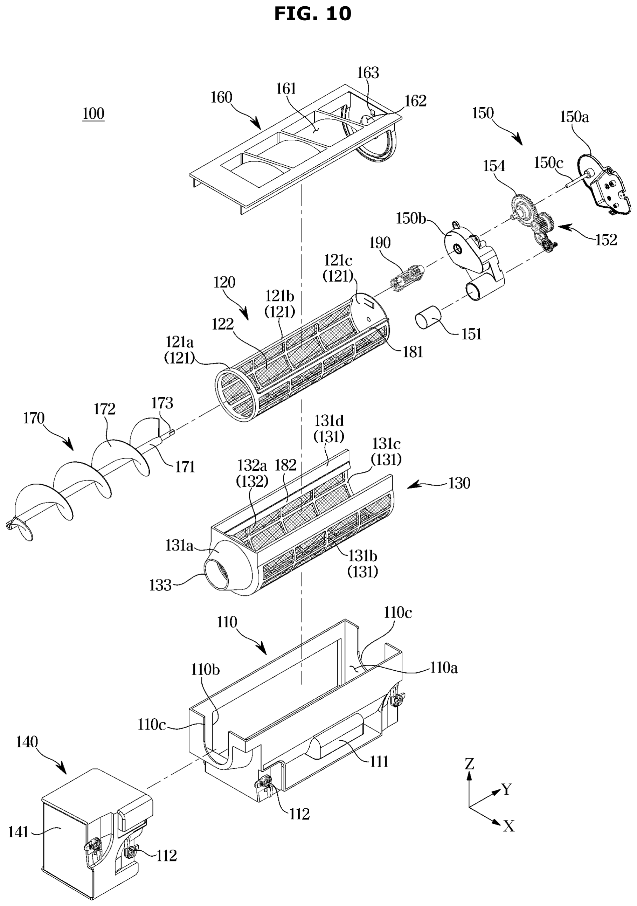

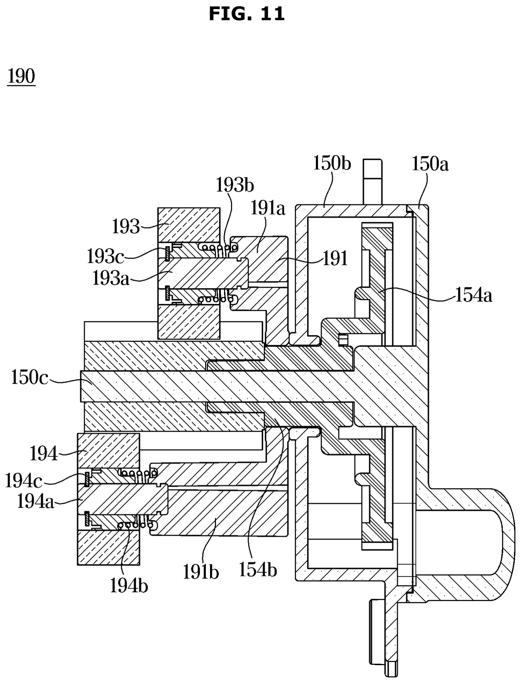

FIG. 8 is a perspective view of the lint removal device in the clothes dryer according to an embodiment. FIG. 9 is an exploded perspective view of the lint removal device in the clothes dryer according to an embodiment. FIG. 10 is an exploded perspective view of the lint removal device in the clothes dryer according to an embodiment. FIG. 9 is a front exploded perspective view of the lint removal device, and FIG. 10 is a rear exploded perspective view of the lint removal device. FIG. 11 is a cross-sectional view of the lint removal device in the clothes dryer according to an embodiment. FIG. 11 is a cross-sectional view of a clutch and a driving device.

Referring to FIGS. 8 to 11, the lint removal device 100 may include the housing 110. The housing 110 may accommodate a plurality of filters 120 and 130. The housing 110 may form an accommodation space 110a in which the plurality of filters 120 and 130 is accommodated. The accommodation space 110a may be the inner space 110a and may be the inner flow path 110a of the lint removal device 100.

The handle 111 may be formed on a front side of the housing 110. The user may use the handle 111 to withdraw the housing 110 and the filters 120 and 130 from the inside of the cabinet 10 to the outside of the cabinet 10 (see FIGS. 4 and 5). The handle 111 may be formed on a front lower side of the housing 110.

A housing opening 110b may be formed on a rear wall of the housing 110. The housing opening 110b may communicate with the accommodation space 110a and the communication opening 90b, respectively. The air passed through the plurality of filters 120 and 130 may sequentially pass through the housing opening 110b and the communication opening 90b and flow into the heat exchanger 60.

Mounting portions 110c may be provided on opposite sides of the housing 110. The mounting portion 110c may be formed to be open. For example, the insides of the lint box 140 and the housing 110 may be communicated through the right mounting portion 110c. A second cover part 162 of a cover 160 may be inserted into and a filter gear 124 may pass through the left mounting part 110c.

The lint removal device 100 may further include a rotation member 170.

The rotation member 170 may include a rotation shaft 171 and a spiral-shaped fin 172 provided on the rotation shaft 171. The fin 172 may be formed along an axial direction of the rotation shaft 171. The fin 172 may be referred to as the blade 172. The fin 172 of the rotation member 170 may scrape an inner surface 122a of the first filter 120 and transfer the collected lint to the lint box 140.

The rotation member 170 may further include a mounting part 173. The mounting part 173 may be formed at one end of the rotation shaft 171. For example, the mounting part 173 may be formed at one end (e.g., left end) of the rotation shaft 171 along a Y direction to be mounted within a screw gear 174. An outer surface of the mounting part 173 may include a flat surface. The mounting part 173 may be mounted within the screw gear 174 to transmit power to the rotation member 170. The screw gear 174 may be the rotation member gear 174. FIGS. 9 and 10 illustrate that the rotation member gear 174 and the filter gear 124 are adjacent to each other, but the rotation member gear 174 and the filter gear 124 may be spaced apart from each other.

A driving device 150 including a motor 151 is coupled to one end of the rotation member 170 to generate power to rotate the rotation member 170.

The lint removal device 100 may further include the plurality of filters 120 and 130. The plurality of filters 120 and 130 may be disposed within the housing 110 to filter out lint in the air discharged from the drum 30. The plurality of filters 120 and 130 may include the first filter 120 and the second filter 130.

The first filter 120 may extend in the Y direction (e.g., left-right direction) to have a cylindrical shape. The first filter 120 may have an open upper end. The air passed through the drum 30 may flow to the first filter 120 side through the open upper end of the first filter 120. The rotation member 170 may be disposed inside the first filter 120. The driving device 150 may be disposed on one side of the first filter 120.

The first filter 120 may include filter frames 121 and a filter part 122. The filter frames 121 may form an outer appearance of the first filter 120. The filter frame 121 may include a grid shape. The filter part 122 is disposed between the filter frames 121, and the air passed through the drum may be filtered while passing through the filter part 122. For example, lint may be removed from the air passing through the filter part 122 of the first filter 120. The filter part 122 may include a grid shape with a very small cross-sectional area. The filter frame 121 of the first filter 120 may be the first filter frame 121. The filter part 122 of the first filter 120 may be the first filter part 122.

The first filter frame 121 may include a first frame part 121a, a second frame part 121b, and a third frame part 121c.

The first frame part 121a may be provided at a first end of the plurality of filter frame parts 121. For example, the first frame part 121a may be provided at one end in a -Y direction (e.g., right direction). The first frame part 121a may include a ring shape. The first frame part 121a may form a right end of the filter frame 121. The first frame part 121a may be open. A first frame part 131a of the second filter 130 may be disposed outside the first frame part 121a of the first filter 120 to surround the first frame part 121a of the first filter 120.

The second frame part 121b may include a grid shape. The second frame part 121b may be provided between the first frame part 121a and the third frame part 121c. The filter part 122 may be coupled to the second frame part 121b. The second frame part 121b may extend in the Y direction (e.g., left-right direction) to have a cylindrical shape and having an open upper end.

A cleaning member 181 may be mounted on the second frame part 121b. The cleaning member 181 may be mounted on a front end of the second frame part 121b. The cleaning member 181 may extend along a left-right direction. For example, the cleaning member 181 may be injected together with the filter frame part 121. The cleaning member 181 may be configured to be included in the first filter 120.

The cleaning member 181 may include a first part 181a and a second part 181b. The first part 181a may be mounted on the second frame part 121b of the first filter 120. The second part 181b may protrude from the first part 181a toward the second filter 130. For example, the second part 181b may protrude toward the outside of the first filter 120. The second part 181b may scrape off lint collected in an inner surface 132a of the second filter 130 as the first filter 120 and the cleaning member 181 rotate. Because the rotation member 170 cleans the first filter 120, the rotation member 170 may be the first cleaning member 170, and because the cleaning member 181 cleans the second filter 130, the cleaning member 181 may be the second cleaning member 181.

The third frame part 121c may be provided at second ends of the plurality of filter frames part 121. For example, the third frame part 121c may be provided at one end in the Y direction (e.g., left direction). The third frame part 121c may include a circular shape and/or an annular shape. The third frame part 121c may form a left end of the filter frame 121. The rotation shaft 171 may be mounted on the third frame part 121c. A stopper 125 and/or the filter gear 124 may be formed on the third frame part 121c.

The lint removal device 100 may further include the filter gear 124. The filter gear 124 may receive power from the motor 151 through a clutch 190 so that the power is transmitted to the first filter 120. For example, the filter gear 124 may be engaged with a second gear 193 of the clutch 190. The first filter 120, which has received the power through the filter gear 124, may be rotated. The filter gear 124 may be provided on the third frame part 121c. For example, the filter gear 124 may be provided at one end (e.g., left end) of the third frame part 121c along the Y direction. The filter gear 124 may be formed integrally with the third frame part 121c, or may be formed separately so that the filter gear 124 may be mounted on the third frame part 121c. The filter gear 124 may be configured to be included in the first filter 120. The filter gear 124 may be disposed between the first filter frame 122 and the rotation member gear 174 while the components of the lint removal device are coupled.

The first filter 120 may further include the stopper 125. The stopper 125 may be provided on the third frame part 121c. For example, the stopper 125 may protrude in the Y direction from the third frame part 121c. The stopper 125 may be formed above the filter gear 124 in a state in which the first filter 120 is not rotated. The stopper 125 may prevent the first filter 120 from being rotated together while the rotation member 170 is rotated within the first filter 120. The stopper 125 may be inserted into a stopper hole 163 formed on the cover. The stopper 125 may be the rotation prevention part 125.

The second filter 130 may extend in the Y direction (e.g., left-right direction) to have a cylindrical shape. The second filter 130 may have an open upper end. The air passed through the drum 30 and the first filter 120 may flow to the second filter 130 side through the open upper end of the second filter 130. The first filter 120 may be disposed inside the second filter 130. The second filter 130 may be disposed outside the first filter 120 to surround the first filter 120. Lint in the air that is not filtered out by the first filter 120 may be filtered out by the second filter 130. Therefore, the inflow of lint into the heat exchanger 60 may be minimized. In addition, the second filter 130 may have a mesh shape with a smaller cross-sectional area than the first filter 120, and thus more fine lint may be filtered out. The driving device 150 may be disposed on one side of the second filter 130, and the lint box 140 may be disposed on the other side thereof.

The second filter 130 may include filter frames 131 and a filter part 132. The filter frames 131 may form an outer appearance of the second filter 130. The filter frame 131 may include a grid shape. The filter part 132 is disposed between the filter frames 131, and the air passed through the drum may be filtered while passing through the filter part 132. For example, lint may be removed from the air passing through the filter part of the second filter 130. The filter part 132 may include a grid shape with a very small cross-sectional area. The filter frame 131 of the second filter 130 may be the second filter frame 131. The filter part 132 of the second filter 130 may be the second filter part 132. The second filter part 132 may have a mesh shape. The cross-sectional area of the mesh shape of the second filter part 132 may be smaller than the cross-sectional area of the mesh shape of the first filter part 131. However, the cross-sectional areas of the first filter part 131 and the second filter part 132 are not limited to the above example.

The second filter frame 131 may include the first frame part 131a, a second frame part, a third frame part, and a fourth frame part.

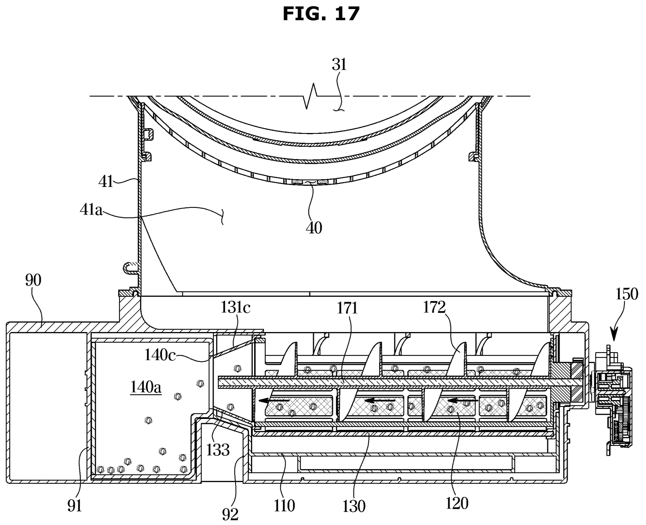

The first frame part 131a may be provided at a first end of the plurality of filter frame parts 131. For example, the first frame part 131a may be provided at one end in the -Y direction (e.g., right direction). The first frame part 131a may include a ring shape. The first frame part 131a may form a right end of the filter frame 131. The first frame part 131a may be inclined in a direction away from the second filter part 132. A cross-sectional area of the first frame part 131a may become smaller as it is further away from the second filter part 132. For example, the first frame part 131a may be provided in a tapered shape so that the cross-sectional area thereof becomes smaller toward the lint box 140 in an axial direction of a rotation shaft 150c. The first frame part 131a may guide lint to the lint box 140. The first frame part 131a may be referred to as the lint guide 131a. The first frame part 131a may be the lint leading part 131a. The lint guide 131a may guide a lint layer pushed out from the first filter 120 to the lint box 140 (see FIG. 17).

One end of the first frame part 131a may have a hole 133 with an area corresponding to a hole 140c of the lint box 140. The other end of the first frame part 131a may be connected to the second frame part 131b.

The second frame part 131b may include a grid shape. The second frame part 131b may be provided between the first frame part 131a and the third frame part 131c. The filter part 132 may be coupled to the second frame part 131b. The second frame part 131b may extend in the Y direction (e.g., left-right direction) to have a cylindrical shape and having an open upper end.

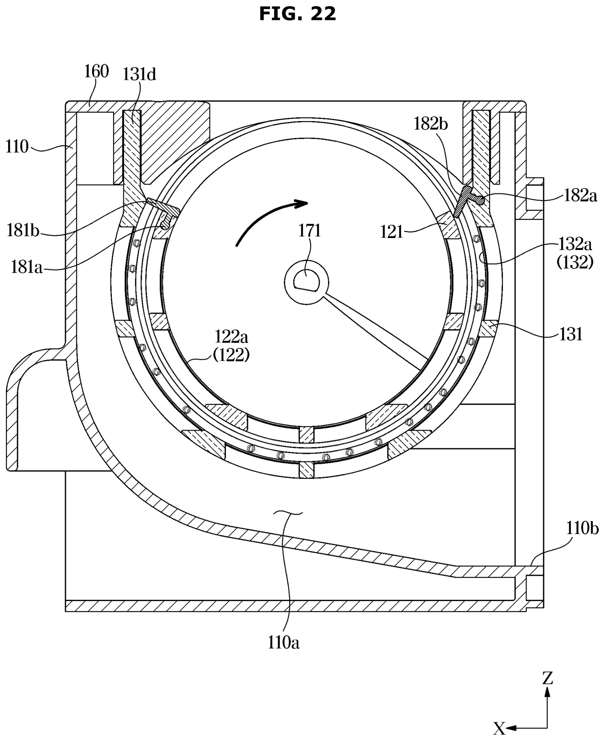

A blocking member 182 may be mounted on the second frame part 131b. The blocking member 182 may prevent the air discharged from the drum from flowing into the second filter 130 without passing through the first filter 120. For example, the blocking member may be disposed between the first filter 120 and the second filter 130 while the first filter 120 and the second filter 130 are coupled (see FIG. 22). The blocking member 182 may be mounted at a rear end of the second frame part 131b. The blocking member 182 may extend along the left-right direction. For example, the blocking member 182 may be injected together with the filter frame part 131.

The blocking member 182 may include a first part 182a and a second part 182b. The first part 182a may be mounted on the second frame part 131b of the second filter 130. The second part 182b may protrude from the first part 182a toward the first filter 120. For example, the second part 182b may protrude toward the inside of the second filter 130. The second part 182b may scrape off lint collected on an outer surface of the first filter 120 as the first filter 120 is rotated.

The third frame part 131c may be provided at second ends of the plurality of filter frame parts 131. For example, the third frame part 131c may be provided at one end in the Y direction (e.g., left direction). The third frame part 131c may include a ring shape. The third frame part 131c may form a left end of the filter frame. The third frame part 131c may be open, and the third frame part 121c of the first filter 120 may be accommodated inside the open third frame part 131c.

The fourth frame part 131d may extend upward from the second frame part 131b. The fourth frame part 131d may be inserted into the cover 160 (see FIG. 22). The fourth frame part 131d may allow the second filter 130 to be mounted on the cover 160. The fourth frame part 131d may form an upper edge of the second filter 130.

The clothes dryer may also further include a third filter coupled to the communication opening 90b and/or the housing opening 110b. For example, lint in the air that is not filtered out by the first filter 120 and the second filter 130 may be filtered out by the third filter.

However, the ordinals of "first," "second," and "third" do not limit the configuration of the first filter 120, second filter 130, and third filter. For example, among the plurality of filters 120 and 130, the innermost filter may be referred to as the second filter, and the filter disposed outside the second filter may be referred to as the first filter.

The lint removal device 100 may further include the cover 160. The cover 160 may also be referred to as the frame member 160. The cover 160 may cover an upper portion and side of the housing 110. The cover 160 may include a first cover part 161 and a second cover part 162.

The first cover part 161 may cover the upper portion of the housing 110 at which the first filter 120 and the second filter 130 are accommodated. An intake port 161a may be formed on the first cover part 161. The intake port 161a may allow the air passed through the drum 30 to be introduced into the lint removal device 100. Lint may be removed as the air passed through the drum 30 passes through the intake port 161a and passes through the first filter 120 and the second filter 130.

The second cover part 162 may cover the side of the housing 110. For example, the second cover part 162 may cover the left mounting portion 110c of the housing 110. A mounting hole 162a may be formed on the second cover part 162. The second filter 130 may penetrate and be inserted into the mounting hole 162a. For example, the filter gear 124 may be inserted into the mounting hole 162a.

The stopper hole 163 may be formed on the second cover part 162. Because the stopper 125 may be inserted into the stopper hole 163, the first filter 120 may be prevented from being rotated while the rotation member 170 is rotated. The stopper hole 163 may be formed at a position corresponding to the stopper 125 so that the stopper 125 is inserted while the first filter 120 is disposed between the housing 110 and the cover. The stopper hole 163 may be provided above the mounting hole 162a.

The lint removal device 100 may further include the lint box 140. Lint accumulated in the first filter 120 may be scraped and transferred by the rotation member 170 and accommodated in the lint box 140. The lint box 140 may be disposed on one side of the housing 110. The lint box 140 is disposed on one side of the lint guide 131a. For example, the lint box 140 may be disposed at right ends of the first filter 120 and the second filter 130.

The lint box 140 is disposed adjacent to one ends of the plurality of filters 120 and 130, so that the lint layer may be easily transferred to the lint box 140 without installing a complicated transfer mechanism.

The lint box 140 may include the accommodation space 140a to accommodate the lint layer, and the door 141 to cover a side of the accommodation space 140a (see FIG. 7). On the opposite side of the door 141 of the lint box 140, a hole 141c may be formed through which the lint layer passes through the lint guide 131a. Therefore, the lint layer scraped off from the plurality of filters 120 and 130 may be transferred into the accommodation space 140a of the lint box 140.

The lint box 140 of the clothes dryer 1 is configured separately from the lint case 110 and may be installed detachably at a lower portion of the cabinet 10.

The lint removal device 100 may further include the driving device 150. The driving device 150 may transmit power to the first filter 120 and/or the rotation member 170 to rotate the first filter 120 and/or the rotation member 170. The driving device 150 may include the motor 151. The motor 151 may rotate in both directions. For example, the motor 151 may rotate in a first direction and in a second direction opposite to the first direction. The driving device 150 may be disposed at one ends of the first filter 120 and the second filter 130. For example, the driving device 150 may be disposed at left ends of the first filter 120 and the second filter 130.

The driving device 150 may include driving cases 150a and 150b. The driving cases 150a and 150b may include the first case 150a and the second case 150b. The first case 150a and the second case 150b may be coupled to each other to accommodate a power transmission unit 152. The driving cases 150a and 150b may include a shaft 150c. The shaft 150c may protrude from the first case 150a. The shaft 150c may penetrate and be inserted into a hole 150d formed on the second case 150b.

The driving device 150 may further include the power transmission unit 152. The clutch 190 and a power transmission gear 154 may be rotated based on the shaft 150c. The shaft 150c may extend and protrude toward the first filter 120 and the second filter 130. The intermediate gear 193 of the clutch 190 and the power transmission gear 154 may be mounted on the shaft 150c.

The power transmission unit 152 may include a plurality of gears. Power generated from the motor 151 may be transmitted to the clutch 190 through a gear connected to a motor shaft 151a and other gears. The power transmission gear 154 provided on the power transmission unit 152 may transmit the power to the clutch 190. The power transmission gear 154 may be rotated based on the shaft 150c of the driving cases 150a and 150b. The power transmission gear 154 may include a first part 154a and a second part 154b. The first part 154a may be engaged with the power transmission gear 154 and a plurality of the other gears 152. The second part 154b may extend from the first part 154a toward the clutch 190, and may be disposed inside the intermediate gear 193 of the clutch 190 to transmit the power to the clutch 190. The first part 154a may be the gear part 154a, and the second part 154b may be the extension part 154b.

The lint removal device 100 may further include the clutch 190. The clutch 190 may transmit power to the first filter 120 or the rotation member 170. The clutch 190 may transmit power to any one of the first filter 120 and the rotation member 170. The clutch 190 may transmit power from the motor 151 to the first filter 120 and block power transmission from the motor 151 to the rotation member 170, or may block power transmission from the motor 151 to the first filter 120 and transmit power from the motor 151 to the rotation member 170.

The clutch 190 may include a clutch panel 191 (see FIG. 11). The power transmission gear 154 of the driving device 150 may be inserted into the clutch panel 191. For example, the extension part 154b of the power transmission gear 154 may be inserted into the clutch 190 by penetrating the clutch panel 191.

The clutch panel 191 may include a first panel part 191a and a second panel part 191b. The first panel part 191a and the second panel part 191b may extend in a direction toward the first filter 120 and the second filter 130. The first panel part 191a may be a first extension part, and the second panel part 191b may be a second extension part.

A first pin 193a for mounting the first gear 193 to the clutch panel 191 may be mounted on the first panel part 191a. The first pin 193a may be mounted on the first gear 193 by penetrating the first gear 193. The first pin 193a may be a rotation shaft of the first gear 193. A movement of a front end of the first pin 193a may be restricted by a fixing ring 193c, and a movement of a rear end of the first pin 193a may be restricted by a first spring 193b. The first spring 193b may provide a frictional force between the clutch panel 191 and the first gear 193 so that the first gear 193 may be rotated together without idling while the clutch panel 191 is rotated.

A second pin 194a for mounting the second gear 194 to the clutch panel 191 may be mounted on the second panel part 191b. The second pin 194a may be mounted on the second gear 194 by penetrating the second gear 194. The second pin 194a may be a rotation shaft of the second gear 194. A movement of a front end of the second pin 194a may be restricted by a fixing ring 194c, and a movement of a rear end of the second pin 194a may be restricted by a second spring 194b. The second spring 194b may provide a frictional force between the clutch panel 191 and the second gear 194 so that the second gear 194 may be rotated together without idling while the clutch panel 191 is rotated.

The clutch 190 may include a plurality of gears 192, 193, and 194. The plurality of gears 192, 193, and 194 may include the upper gear 193, the lower gear 194, and an intermediate gear 195. The upper gear 193 may be the first gear 193, the lower gear 194 may be the second gear 194, and the intermediate gear 195 may be the third gear 195.

The first gear 193 may receive power from the motor 151 and the power transmission unit 152 and rotate in the direction of a first clutch while being engaged with the third gear 195. Thereafter, the first gear 193 may transmit the power to the rotation member 170 while being engaged with the rotation member gear 174. Accordingly, the rotation member 170 may be rotated to remove lint collected on the inner surface 122a of the first filter 120. The first gear 193 may be disposed closer to the driving cases 150a and 150b than the second gear 194. Also, the first gear 193 may be disposed farther from the first filter 120 and the second filter 130 than the second gear 194.

The second gear 194 may receive power from the motor 151 and the power transmission unit 152 and rotate in the direction of a second clutch while being engaged with the third gear 195. Thereafter, the second gear 194 may transmit the power to the first filter 120 while being engaged with the filter gear 124. Accordingly, the first filter 120 may be rotated to remove lint collected on the inner surface 132a of the second filter 130. The second gear 194 may be disposed farther from the driving cases 150a and 150b than the first gear 193. The second gear 194 may be disposed closer to the first filter 120 and the second filter 130 than the first gear 193.

The third gear 195 may be disposed between the first gear 193 and the second gear 194 in the up-down direction. The third gear may be engaged with the first gear 193 and the second gear 194. The third gear 195 may cause the first gear 193 and the second gear 194 to rotate. The shaft 150c of the driving cases 150a and 150b may be disposed on the third gear 195. The shaft 150c of the drive cases 150a and 150b may penetrate and be inserted into the third gear 195.

However, the ordinals of "first," "second," and "third" do not limit the configuration of the first gear 193, second gear 195, and third gear 192. For example, among the plurality of gears 193, 194, and 195, the lower gear 194 may be referred to as the first gear, the upper gear 193 may be referred to as the second gear, and the intermediate gear 195 may be referred to as the third gear.

Both the first filter 120 and the second filter 130 may be cleaned using only the single motor 151 through the clutch 190. Therefore, because a plurality of motors is not provided, the material and production costs of the lint removal device and the clothes dryer including the same may be reduced.

The lint removal device 100 may be set to operate for a predetermined period of time after the end of operation of operation of the clothes dryer 1 or before the start of operation of the clothes dryer 1, for example, when the blowing fan 50 or the heat exchanger 60 does not operate.

Lint in the air circulating during the drying process is captured by the plurality of filters 120 and 130 and accumulates on the inner surfaces 122a and 132a.

After the drying process is completed, a layered lint mass may be formed by the lint remaining on the inner surfaces 122a and 123a. The lint layer accumulated in the first filter 120 may be scraped off from the first filter 120 by the rotation member 170 as the rotation member 170 is rotated, and may be pushed to one side of the first filter 120. The lint layer pushed to the one side may be moved to the lint box 140 (see FIG. 17).

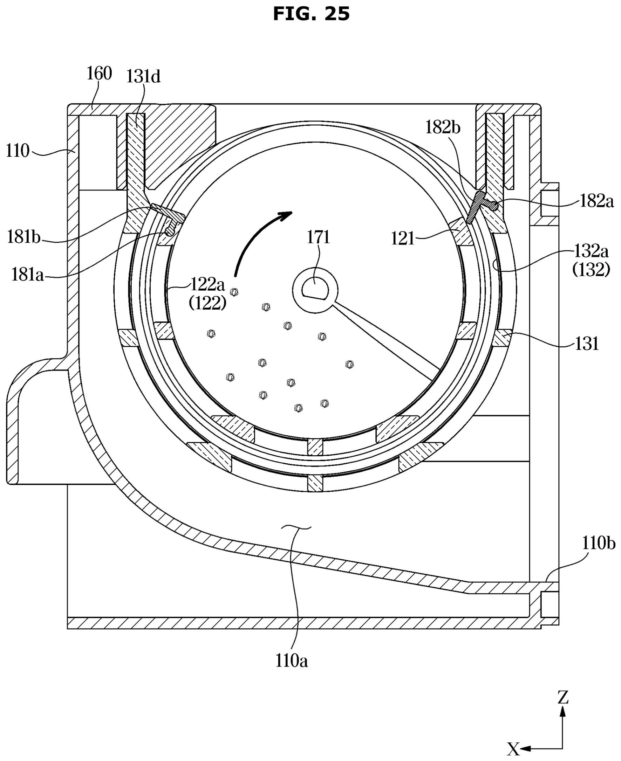

The lint layer accumulated in the second filter 130 is scraped off from the second filter 130 by the cleaning member 181 as the first filter 120 is rotated (see FIGS. 22 to 24). Thereafter, the lint layer is collected inside the first filter 120 (see FIG. 25) and may be moved to the lint box 140 by the rotation member 170.

The lint removal device 100 may not operate during the drying process. Because the lint removal device 100 may remove lint in a lump before the drying process or after the end of operation, the lint may be removed in a short time.

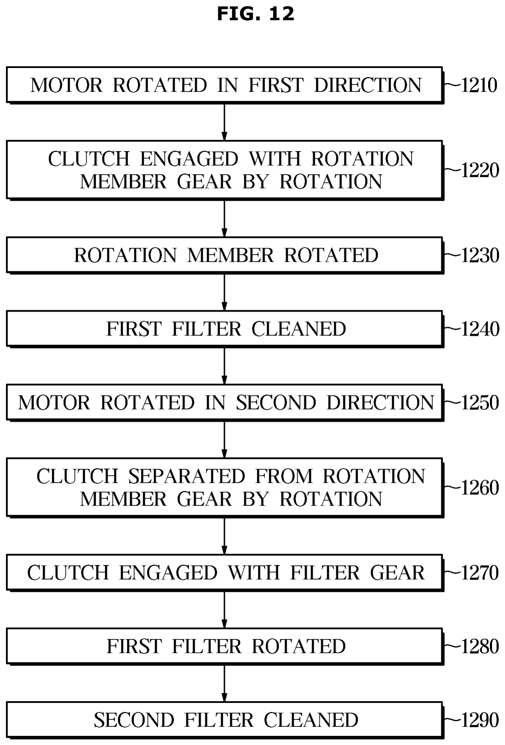

FIG. 12 is a flowchart illustrating a sequence of operations of the lint removal device in the clothes dryer according to an embodiment.

Referring to FIG. 12, after the drying process is completed, a cleaning process may be performed. The rotation member 170 may be rotated to remove the lint accumulated in the first filter 120 during the cleaning process. The motor 151 may rotate to rotate the rotation member 170. The motor 151 may be rotated in the first direction (1210). For example, the motor 151 may rotate clockwise.

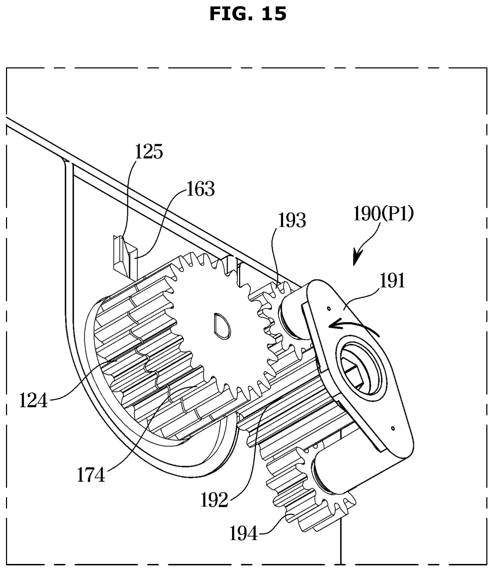

As the motor 151 rotates in the first direction, power may be transmitted to the clutch 190 through the power transmission unit 152. The clutch 190 may be rotated in the first direction by receiving the power. As the clutch 190 is rotated in the first direction, the first gear 193 of the clutch 190 and the rotation member gear 174 may be engaged (1220) (see FIG. 15).

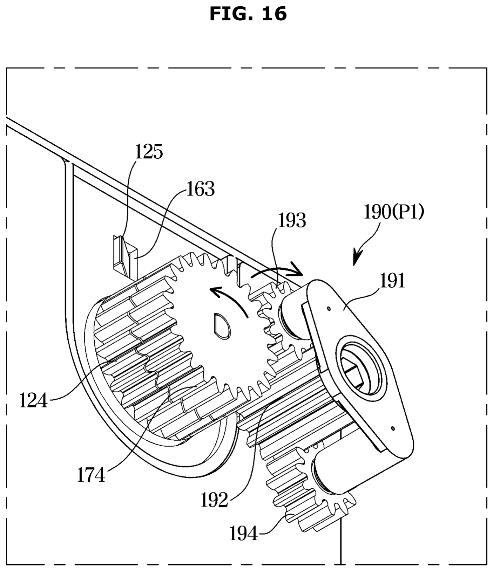

The motor 151 may continue to rotate in the first direction to transmit the power to the clutch 190. The first gear 193 of the clutch 190 is rotated to rotate the rotation member gear 174 (see FIG. 16), and as the rotation member gear 174 is rotated, the rotation member 170 disposed inside the first filter 120 may be rotated (1230). The rotation member 170 may be rotated for a preset time. As the rotation member 170 is rotated, the rotation member 170 may clean the first filter 120 by scraping off the lint attached on the inner surface 122a of the first filter 120 (1240). The lint scraped off from the first filter 120 may be moved to the lint box 140 side. Therefore, even when the user does not manually take out the first filter 120 to clean the first filter 120, the first filter 120 may be cleaned through the rotation member 170, thereby increasing convenience of the user. The rotation member 170 may be the first cleaning member.

The cleaning of the first filter 120 through the rotation member 170 may be performed following the drying process. For example, the cleaning of the first filter 120 may be performed every time each drying process is completed. However, a cleaning cycle of the first filter 120 is not limited to the above example. For example, a cleaning process of the first filter 120 may be performed even during the drying process of the clothes dryer. Also, the cleaning process of the first filter 120 may be continuously performed during all processes of the clothes dryer. Also, the cleaning process of the first filter 120 may be performed repeatedly two or more times according to a certain cycle.

Thereafter, the first filter 120 may be rotated to remove the lint accumulated in the second filter 130 and move the accumulated lint to the inside of the first filter 120. The motor 151 may rotate to rotate the first filter 120. The motor 151 may rotate in the second direction different from the first direction (1250). For example, the motor 151 may rotate counterclockwise.

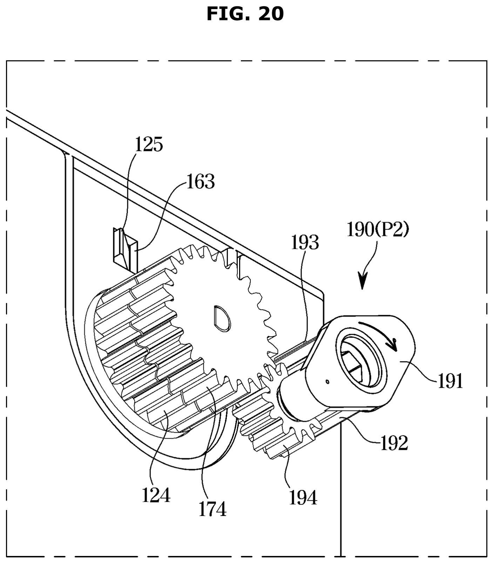

As the motor 151 rotates in the second direction, power may be transmitted to the clutch 190 through the power transmission unit 152. The clutch 190 may be rotated in the second direction by receiving the power. As the clutch 190 be rotated in the second direction, the first gear 193 of the clutch 190 and the rotation member gear 174 may be separated (1260). As the clutch 190 is rotated in the second direction, the second gear 194 of the clutch 190 and the filter gear 124 may be engaged (1270) (see FIG. 20).

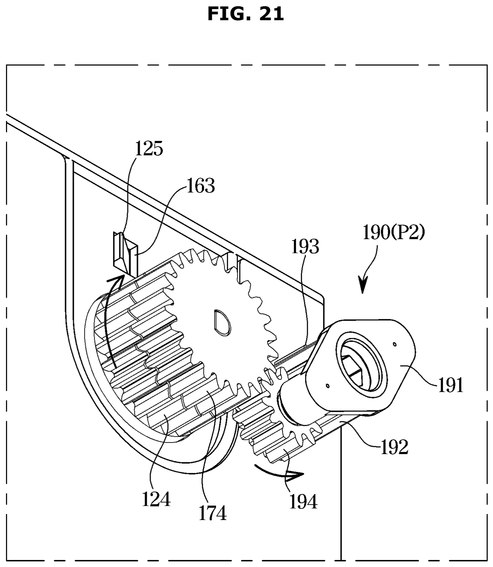

The motor 151 may continue to rotate in the second direction to transmit power to the clutch 190. The second gear 194 of the clutch 190 is rotated to rotate the filter gear 124 (see FIG. 21), and as the filter gear 124 is rotated, the first filter 120 disposed inside the second filter 130 may be rotated (1280). The first filter 120 may be rotated for a preset time. As the first filter 120 is rotated, the cleaning member 181 mounted on the first filter 120 may scrape off and clean the lint attached to the inner surface 132a of the second filter 130 (1290). The scraped-off lint may be moved to the inside of the first filter 120. Thereafter, when the first filter 120 is cleaned, the rotation member 170 may move the moved lint to the lint box 140 side. Therefore, even when the user does not manually take out the second filter 130 to clean the second filter 130, the second filter 130 may be cleaned through the cleaning member 181, thereby increasing the convenience of the user. The cleaning member 181 may be referred to as a wiper.

The cleaning of the second filter 130 through the cleaning member 181 may be performed following the drying process. For example, the cleaning of the second filter 130 may be performed after each drying process. Also, the cleaning of the second filter 130 may be performed every time a plurality of the drying processes is completed, and for example, the cleaning of the second filter 130 may be performed after the drying process has been performed five times. Also, regardless of the cleaning of the first filter 120, the cleaning of only the second filter 130 may be performed. Also, a cleaning process of the second filter 130 may be performed even during the drying process of the clothes dryer. Also, the cleaning process of the second filter 130 may be continuously performed during all the processes of the clothes dryer. Also, the cleaning process of the second filter 130 may be performed repeatedly two or more times according to a certain cycle.

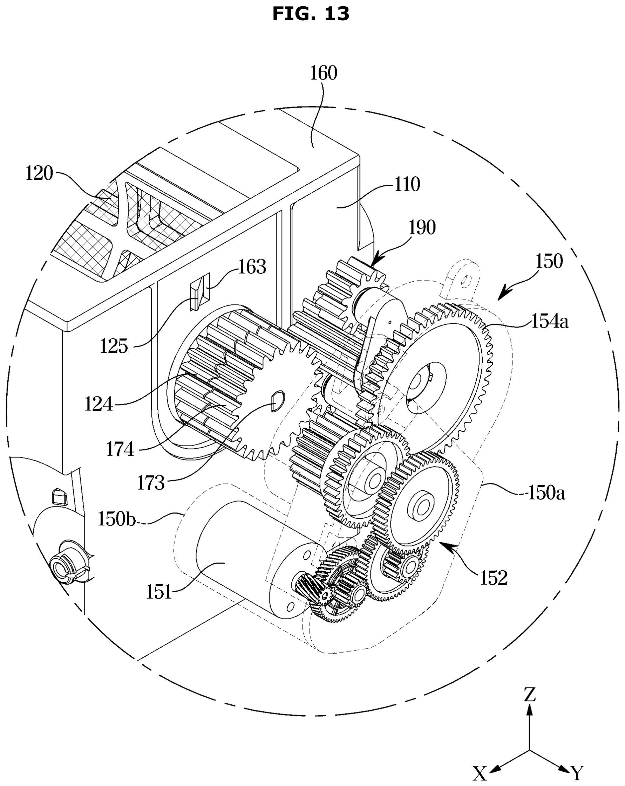

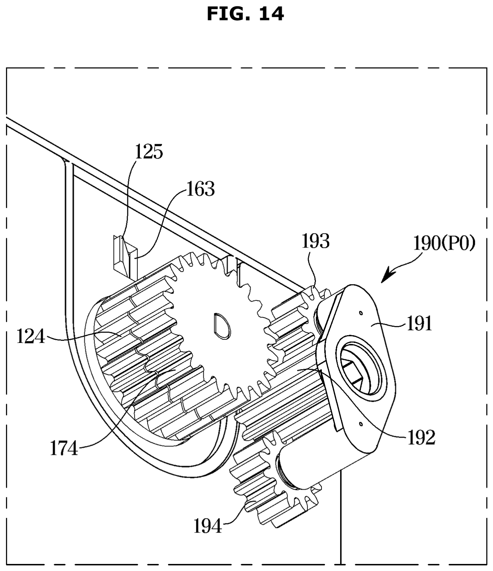

FIG. 13 is an enlarged view of the lint removal device in the clothes dryer according to an embodiment. FIG. 14 is an enlarged view of the lint removal device in the clothes dryer according to an embodiment. FIG. 15 is an enlarged view of the lint removal device in the clothes dryer according to an embodiment. FIG. 16 is an enlarged view of the lint removal device in the clothes dryer according to an embodiment. FIG. 17 is a cross-sectional view of the lint removal device in the clothes dryer according to an embodiment.

A process in which the first filter 120 is cleaned by the rotation member 170 will be described below with reference to FIGS. 13 to 17. FIGS. 13 and 14 illustrate the clutch 190 in a neutral position P0. FIG. 15 illustrates that the rotation member gear 174 and the first gear 193 of the clutch 190 are engaged. FIG. 16 illustrates that the rotation member gear 174 is rotated as the first gear 193 of the clutch 190 is rotated. FIG. 17 illustrates that as the rotation member 170 is rotated, the first filter 120 is cleaned and lint moves to the lint box 140.

Referring to FIGS. 13 to 17, while the cleaning process for the first filter 120 is not performed, the clutch 190 may be positioned in the neutral position P0 or a first position. FIGS. 13 and 14 are shown based on the neutral position P0 of the clutch 190.

For example, after the drying process is completed, the cleaning process for the first filter 120 may be performed. When the motor 151 rotates in the first direction, the cleaning process for the first filter 120 may be considered to have started. As the motor 151 rotates in the first direction, the motor 151 may transmit power to the power transmission unit 152. The power generated by the motor 151 may be transmitted to the power transmission gear 154 of the power transmission unit 152, and the power transmission gear 154 may transmit the power to the clutch 190 while rotating. As the power is transmitted to the clutch 190, the clutch 190 may be rotated in the direction of the first clutch, and the first gear 193 may be engaged with the rotation member gear 174 (see FIG. 15). As the motor 151 continues to rotate, the first gear 193 of the clutch 190 may rotate the rotation member gear 174 by rotating in a direction opposite to the direction of the first clutch (see FIG. 16). As the rotation member gear 174 is rotated, the mounting part 173 and the rotation shaft 171 mounted on the rotation member gear 174 may be rotated, and accordingly, the rotation member 170 disposed inside the first filter 120 may be rotated. Therefore, the rotation member 170 may scrape off the lint attached to the inner surface 122a of the first filter 120 and move the scraped lint to the lint box 140 side (see FIG. 17). At this time, for example, as the rotation member gear 174 is rotated, a force rotating the filter gear 124 in a rotation direction of the rotation member gear 174 may be generated due to a frictional force. However, the stopper 125 disposed in the stopper hole 163 is supported on an inner wall of the cover forming the stopper hole 163, so that the first filter 120 may be prevented from rotating together with the rotation member 170.

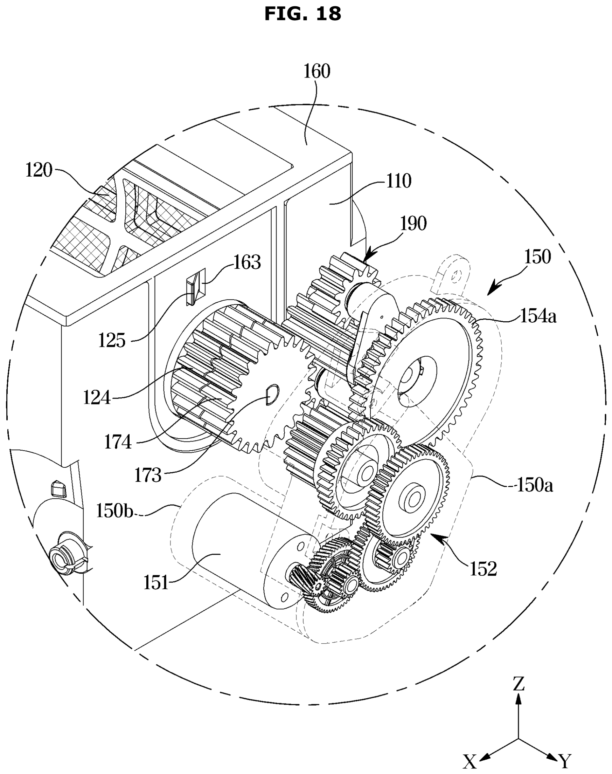

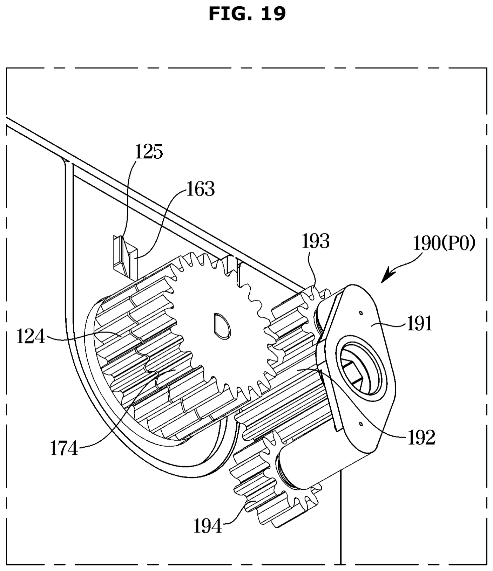

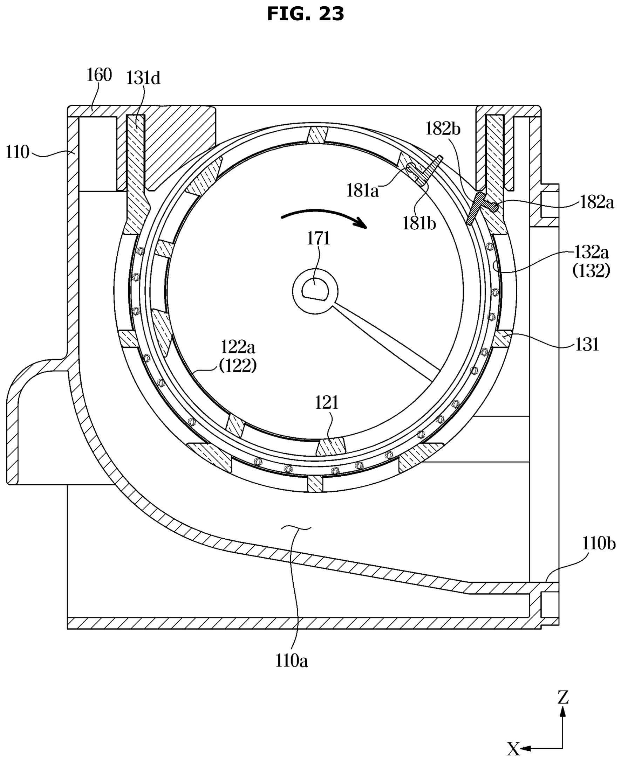

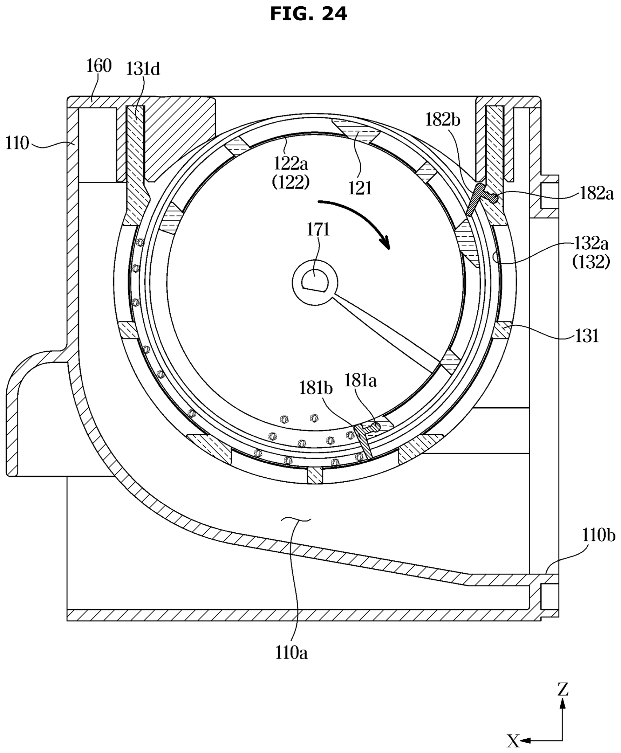

FIG. 18 is an enlarged view of the lint removal device in the clothes dryer according to an embodiment. FIG. 19 is an enlarged view of the lint removal device in the clothes dryer according to an embodiment. FIG. 20 is an enlarged view of the lint removal device in the clothes dryer according to an embodiment. FIG. 21 is an enlarged view of the lint removal device in the clothes dryer according to an embodiment. FIG. 22 is a cross-sectional view of the lint removal device in the clothes dryer according to an embodiment. FIG. 23 is a cross-sectional view of the lint removal device in the clothes dryer according to an embodiment. FIG. 24 is a cross-sectional view of the lint removal device in the clothes dryer according to an embodiment. FIG. 25 is a cross-sectional view of the lint removal device in the clothes dryer according to an embodiment.

A process in which the second filter 130 is cleaned by the cleaning member 181 will be described below with reference to FIGS. 18 to 25. FIGS. 18 and 19 illustrate the clutch 190 in the neutral position P0. FIG. 20 illustrates that the filter gear 124 and the second gear 194 of the clutch 190 are engaged. FIG. 21 illustrates that the filter gear 124 is rotated as the second gear 194 of the clutch 190 is rotated. FIG. 22 illustrates that as the first filter 120 and the cleaning member 181 rotate, the second filter 130 is cleaned and lint moves to the inside of the first filter 120.

Referring to FIGS. 18 to 25, while the cleaning process for the second filter 130 is not performed, the clutch 190 may be positioned in the neutral position P0 or a first position. FIGS. 18 and 19 are shown based on the neutral position P0 of the clutch 190.

For example, after the drying process is completed and/or the cleaning process for the first filter 120 is completed, the cleaning process for the second filter 130 may be performed. When the motor 151 rotates in the second direction, the cleaning process for the second filter 130 may be considered to have started. As the motor 151 rotates in the second direction, the motor 151 may transmit power to the power transmission unit 152. The power generated by the motor 151 may be transmitted to the power transmission gear 154 of the power transmission unit 152, and the power transmission gear 154 may transmit the power to the clutch 190 while rotating. As the power is transmitted to the clutch 190, the clutch 190 may be rotated in the direction of the second clutch, and the second gear 194 may be engaged with the filter gear 124 (see FIG. 20). As the motor 151 continues to rotate, the second gear 194 of the clutch 190 may rotate the filter gear 124 by rotating in a direction opposite to the direction of the second clutch (see FIG. 21). As the filter gear 124 is rotated, the first filter 120 disposed inside the second filter 130 is rotated, and the stopper 125 may deviate from the stopper hole 163 along a tapered shape and may be separated from the stopper hole 163 through slight elastic deformation.

Therefore, as the first filter 120 is rotated, the cleaning member 181 mounted on the first filter 120 may scrape off the lint attached to the inner surface 132a of the second filter 130 and move the attached lint to the inside of the first filter 120. (See FIGS. 22 to 25). The rotation direction of the first filter 120 during the cleaning process for the second filter 130 may be opposite to the rotation direction of the rotation member 170 during the cleaning process for the first filter 120. The cleaning member 181 and the blocking member may interfere with each other while the cleaning member 181 is rotated, but due to the elasticity of the cleaning member 181 and the blocking member, the cleaning member 181 may perform the cleaning of the second filter 130.

When the first filter 120 is rotated at least one turn inside the second filter 130 to scrape off the lint on the inner surface 122a of the first filter 120, the cleaning process for the second filter 130 may be considered to have completed. Thereafter, the lint moved inside the first filter 120 may be moved to the lint box 140 side while the cleaning process for the first filter 120 is performed.

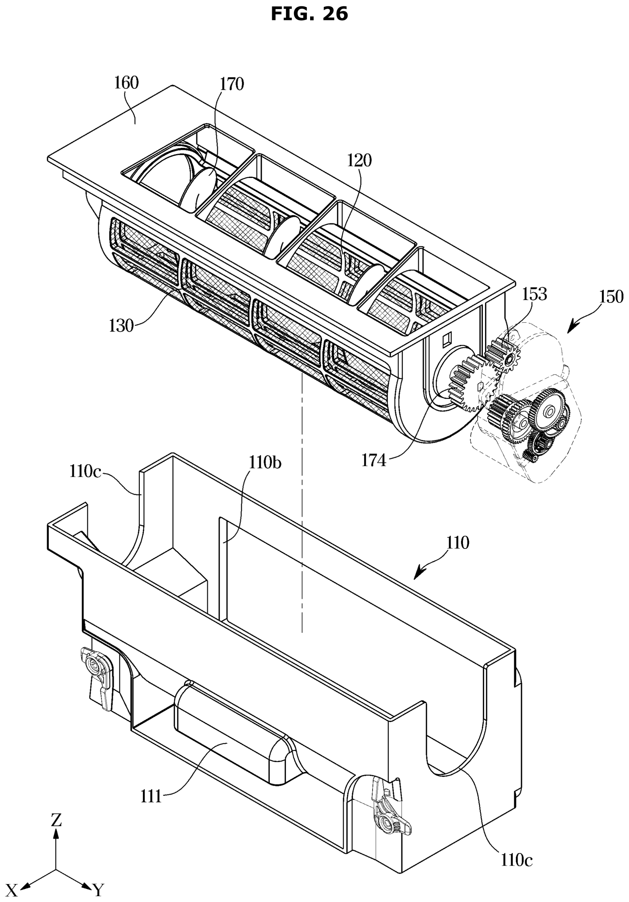

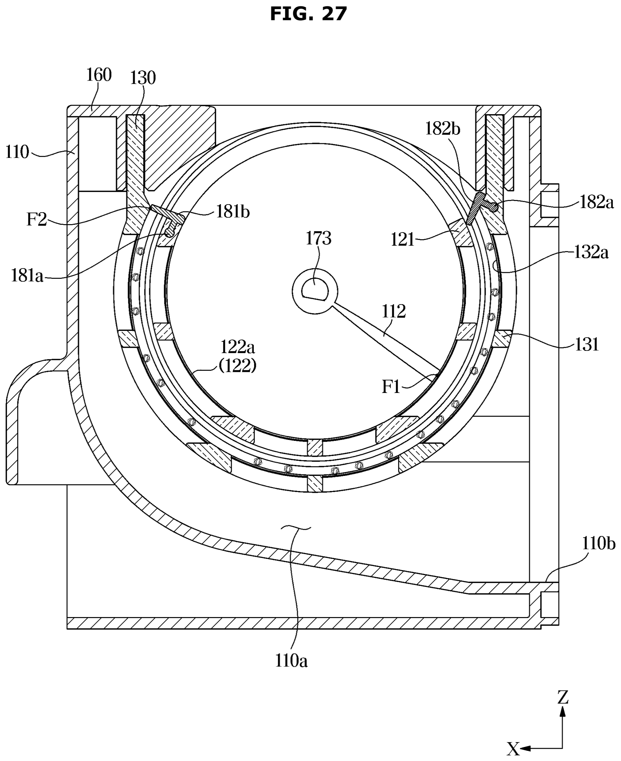

FIG. 26 is a perspective view of the lint removal device in the clothes dryer according to an embodiment. FIG. 27 is a cross-sectional view of the lint removal device in the clothes dryer according to an embodiment.

Referring to FIGS. 26 and 27, in the lint removal device 100 according to an embodiment, the clutch 190, the filter gear, and the stopper may be omitted. For example, when the motor 151 rotates, the gear 153 provided on the outside of the drive cases 150a and 150b may transmit power to the rotation member 170 while being engaged with the rotation member gear 174. Therefore, the rotation member 170 may be rotated to scrape off the lint accumulated on the inner surface 122a of the first filter 120. At this time, a frictional force F1 may occur between the rotation member 170 and the first filter 120.

On the other hand, as there is no stopper in the lint removal device 100 according to an embodiment, the rotation shaft 171 is mounted on the third frame part, and the rotation member 170 is rotated due to the frictional force F1 between the rotation member 170 and the first filter 120, the first filter 120 may also be rotated in the same direction as the rotation member 170. At this time, a frictional force F2 may also occur between the cleaning member 181 and the second filter 130. Therefore, even when the first filter 120 is rotated due to the frictional force F1 between the rotation member 170 and the first filter 120, due to the frictional force F2 between the cleaning member 181 mounted on the first filter 120 and the second filter 130, the first filter 120 may be rotated more slowly than the rotation member 170. For example, the rotation member 170 may be rotated at a speed of 10 RPM, and the first filter 120 may be rotated at a speed of 5 RPM.

As the rotation member 170 and the first filter 120 are rotated at different speeds, a relative speed difference occurs between the rotation member 170 and the first filter 120, so that at the same time that the rotation member 170 may clean the first filter 120, the cleaning member 181 mounted on the first filter 120 may clean the second filter 130.

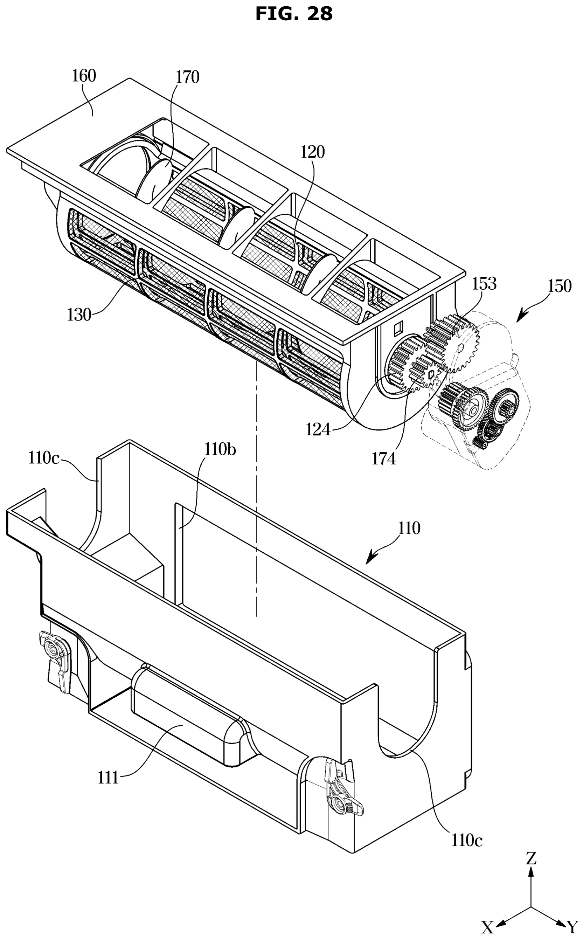

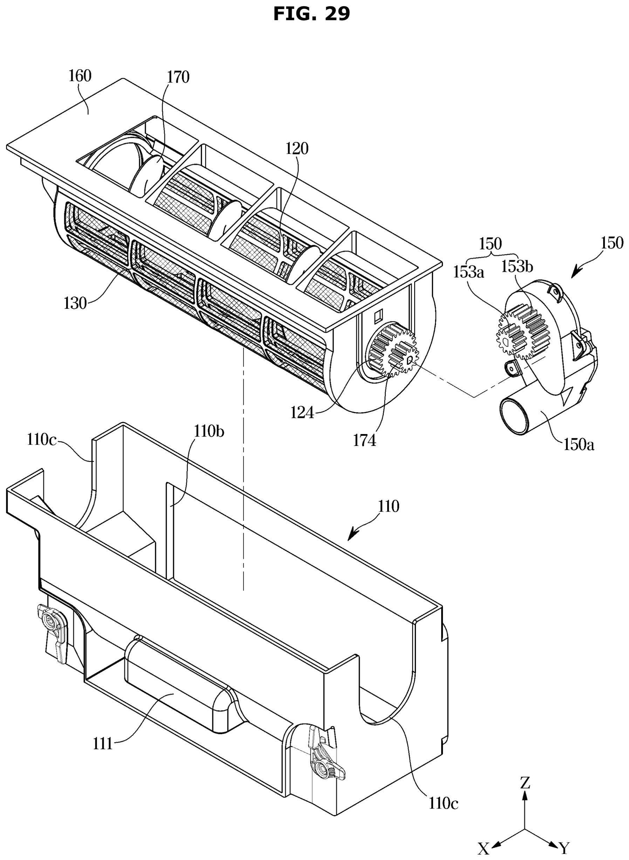

FIG. 28 is a perspective view of the lint removal device in the clothes dryer according to an embodiment. FIG. 29 is a perspective view of the lint removal device in the clothes dryer according to an embodiment.

Referring to FIGS. 28 and 29, in the lint removal device 100 according to an embodiment, the clutch and the stopper may be omitted. For example, when the motor 151 rotates, the gear 153 provided on the outside of the drive cases 150a and 150b may transmit power to the rotation member 170 while being engaged with the rotation member gear 174, and may also transmit power to the first filter 120 while being engaged with the filter gear 124.

The gear 153 may include the first gear part 153a and the second gear part 153b. The first gear part 153a may be engaged with the filter gear 124, and the second gear part 153b may be engaged with the rotation member gear 174. The first gear part 153a may be disposed closer to the filters 120 and 130 than the second gear part 153b. The first gear part 153a and the second gear part 153b may have different numbers of teeth. For example, the first gear part 153a may have a smaller number of teeth than the second gear part 153b.

The rotation member gear 174 may be located farther from the filters 120 and 130 than the filter gear 124. The rotation member gear 174 and the filter gear 124 may have different numbers of teeth. For example, the rotation member gear 174 may have a smaller number of teeth than the filter gear 124. The rotation member gear 174 may have a number of teeth corresponding to the second gear part 153b, and the filter gear 124 may have a number of teeth corresponding to the first gear part 153a.

As the first gear part 153a and the filter gear 124 are engaged, the first filter 120 may be rotated. As the second gear part 153b and the rotation member gear 174 are engaged, the rotation member 170 may be rotated. Because the filter gear 124 and the rotation member gear 174 have different numbers of teeth, the first filter 120 and the rotation member 170 may be rotated at different speeds. For example, because the rotation member gear 174 has a smaller number of teeth than the filter gear 124, the rotation member 170 may be rotated at a faster speed than the first filter 120. For example, the rotation member 170 may be rotated at a speed of 10 RPM, and the first filter 120 may be rotated at a speed of 5 RPM. Therefore, while the rotation member 170 and the first filter 120 are rotated in the same direction at the same time, a difference in relative speed may occur between the rotation member 170 and the first filter 120. Due to the difference in relative speed, at the same time that the rotation member 170 may clean the first filter 120 by scraping off the lint accumulated on the inner surface 122a of the first filter 120, the cleaning member 181 mounted on the first filter 120 may clean the second filter 130.

According to an aspect of the present disclosure, a clothes dryer can be provided in which deterioration of drying performance can be prevented by preventing lint from being introduced into a heat exchanger.

According to an aspect of the present disclosure, a clothes dryer with increased convenience of use can be provided by performing cleaning without user intervention because a first filter is cleaned by a rotation member and a second filter is cleaned by a cleaning member mounted on the first filter rotating.

Effects according to an aspect of the present disclosure are not limited to the effects mentioned above, and other effects not mentioned will be clearly understood by those skilled in the art from the description below.

The clothes dryer according to an embodiment include the drum 30, the exhaust port 40 through which air in the drum is discharged to outside of the drum, the first filter 120 that is rotatable and is configured so that air discharged through the exhaust port passes through the first filter so as to be filtered by the first filter, the second filter 130 configured so that the air passed through the first filter passes through the second filter so as to be filtered by the second filter, to thereby remove lint in the air, and the motor 151 configured to transmit power to the first filter to rotate the first filter. The first filter and the second filter are configured so that rotation of the first filter by the motor causes lint collected in the second filter to be removed from the second filter.

The clothes dryer may further include the cleaning member 181 on the first filter and configured to remove the lint collected in the second filter while the first filter is rotated by the motor.

The second filter may be configured to at least partially surround the first filter. The cleaning member may protrude from the first filter toward the second filter.

The clothes dryer may further include the rotation member 170 that is rotatable and is configured to be rotated by the motor so that rotation of the rotation member causes lint collected in the first filter to be removed from the first filter. The motor may be further configured to transmit power to at least one of the first filter to rotate the first filter and the rotation member to rotate the rotation member.

The clothes dryer may further include the clutch 190 configured to transmit power from the motor to one of the first filter to rotate the first filter and the rotation member to rotate the rotation member.

The clutch may be rotatable by the power transmitted from the motor. The clutch may include the first gear 193 configured to be rotated in a first clutch direction by the power transmitted from the motor so that the rotation member is rotated and the second gear 194 configured to be rotated in a second clutch direction, opposite the first clutch direction, by the power transmitted from the motor so that the first filter is rotated. The cleaning member may remove the lint collected in the second filter with the second gear being rotated in the second clutch direction.

the clutch may be configured to be rotatable from a first position to a second position by the power transmitted from the motor so that, in the first position, the rotation member is rotated by rotation of the first gear to thereby cause the lint collected in the first filter to be removed from the first filter, and in the second position, the first filter is rotated by rotation of the second gear to thereby cause the lint collected in the second filter to be removed from the second filter.

The clothes dryer may further include the rotation member gear 174 at one end of the rotation member and engageable with the first gear, and the filter gear 124 on the first filter, adjacent to the rotation member gear, and engageable with the second gear.

The rotation member and the first filter may be rotatable in different directions. The clothes dryer may further include the stopper 125 configured to prevent the first filter from being rotated while the rotation member is rotated.

The clothes dryer may further include the housing 110 configured to accommodate the rotation member, the first filter, and the second filter, the cover 160 above the housing to cover the housing, and the stopper hole 163 formed on one side of the cover and configured so that the stopper is insertable therein to thereby prevent the first filter from being rotated while the rotation member is rotated.

The clothes fryer may further include a lint box having a box door to open and close the lint box, on a side of the housing, and configured to collect lint. The motor may be disposed on another side of the housing. The rotation member may be configured to scrape the lint collected in the first filter off of the first filter and transfer the scrapped lint fron the first filter to the lint box.

The clothes dryer may further include the heat exchanger 60 configured so that air passed through the second filter passes through the heat exchanger and into the drum, and the blocking member 182 between the first filter and the second filter to prevent part of air discharged through the exhaust port from passing through the heat exchanger without being filtered by the first filter and the second filter.

The first filter and the rotation member may be rotated together by rotation of the rotation member due to a frictional force between the rotation member and the first filter as the rotation member is rotated. As the first filter and the rotation member are rotated together, the first filter may be rotated more slowly than the rotation member due to a frictional force between the cleaning member and the second filter as the first filter is rotated.

The clothes dryer may further include the rotation member gear 174 at one end of the rotation member, the filter gear 124 on the first filter, adjacent to the rotation member gear and having a larger number of teeth than the rotation member gear, and the gear 153 engageable with the rotation member gear and the filter gear, and configured to receive power from the motor and to transmit the received power to the first filter and the rotation member.

The clothes dryer may further include a motor gear. The motor gear may include the first gear part 153a configured to be engageable with the rotation member gear, and the second gear part 153b having a larger number of teeth than the first gear part, and configured to be engageable with the filter gear.

The lint removal device according to an embodiment may include the first filter 120 configured to filter out lint in air, the rotation member 170 including a rotation shaft and a fin extending from the rotation shaft to scrape and collect lint collected in the lint filter, the second filter 130 disposed downstream of the first filter to filter out lint in the air passed through the first filter, the cleaning member 181 mounted on the first filter to protrude toward the second filter, and the motor 151 configured to rotate the first filter so that the cleaning member removes lint collected in the second filter while the first filter is rotated.

The motor may be configured to rotate at least one of the first filter and the rotation member.

The lint removal device may further include the clutch 190 configured to receive power from the motor and transmit the power to one of the first filter and the rotation member, the clutch may include the first gear 193 provided to transmit the power to the rotation member based on rotation of the clutch in a first clutch direction and the second gear 194 provided to transmit the power to the first filter based on rotation of the clutch in a second clutch direction, and the cleaning member may remove the lint collected in the second filter as the second gear is rotated.

The clothes dryer according to an embodiment may include the drum 30, the exhaust port 40 through which air in the drum flows to the outside of the drum, and the lint removal device 100 disposed downstream of the exhaust port to remove lint in air passed through the exhaust port, wherein the lint removal device 100 may include the first filter 120 disposed downstream of the drum and provided to be rotatable, the second filter 130 disposed outside the first filter, the first cleaning member 140 configured to clean the first filter, the second cleaning member 181 configured to clean the second filter, and the motor 151 configured to rotate at least one of the first filter and the rotation member, the first cleaning member may be rotated to clean the first filter based on rotation of the motor in a first direction, and the second cleaning member may be rotated to clean the second filter based on rotation of the motor in a second direction.

The lint removal device may further include the clutch 190 configured to be rotatable by receiving power from the motor, and the clutch may include the first gear 193 provided to transmit the power to the first cleaning member based on rotation of the clutch in a first clutch direction and the second gear 194 provided to transmit the power to the second cleaning member based on rotation of the clutch in a second clutch direction.

The foregoing has illustrated and described specific embodiments. However, it should be understood by those of skilled in the art that the present disclosure is not limited to the above-described embodiments, and various changes and modifications may be made without departing from the technical idea of the present disclosure described in the following claims.

## Claims

1. A clothes dryer comprising:
a drum;
an exhaust port through which air in the drum is discharged to outside of the drum;
a first filter that is rotatable and is configured so that air discharged through the exhaust port passes through the first filter so as to be filtered by the first filter;
a second filter configured so that the air passed through the first filter passes through the second filter so as to be filtered by the second filter, to thereby remove lint in the air; and
a motor configured to transmit power to the first filter to rotate the first filter,
wherein the first filter and the second filter are configured so that rotation of the first filter by the motor causes lint collected in the second filter to be removed from the second filter.

2. The clothes dryer according to claim 1, further comprising:
a cleaning member on the first filter and configured to remove the lint collected in the second filter while the first filter is rotated by the motor.

3. The clothes dryer according to claim 2, wherein
the second filter is configured to at least partially surround the first filter, and
the cleaning member protrudes from the first filter toward the second filter.

4. The clothes dryer according to claim 2, further comprising:
a rotation member that is rotatable and is configured to be rotated by the motor so that rotation of the rotation member causes lint collected in the first filter to be removed from the first filter,
wherein the motor is further configured to transmit power to at least one of the first filter to rotate the first filter and the rotation member to rotate the rotation member.

5. The clothes dryer according to claim 4, further comprising:
a clutch configured to transmit power from the motor to one of the first filter to rotate the first filter and the rotation member to rotate the rotation member.

6. The clothes dryer according to claim 5, wherein
the clutch is rotatable by the power transmitted from the motor,
the clutch includes:
a first gear configured to be rotated in a first clutch direction by the power transmitted from the motor so that the rotation member is rotated, and
a second gear configured to be rotated in a second clutch direction, opposite the first clutch direction, by the power transmitted from the motor so that the first filter is rotated, and
the cleaning member removes the lint collected in the second filter with the second gear being rotated in the second clutch direction.

7. The clothes dryer according to claim 6, wherein
the clutch is configured to be rotatable from a first position to a second position by the power transmitted from the motor so that, in the first position, the rotation member is rotated by rotation of the first gear to thereby cause the lint collected in the first filter to be removed from the first filter, and in the second position, the first filter is rotated by rotation of the second gear to thereby cause the lint collected in the second filter to be removed from the second filter.

8. The clothes dryer according to claim 6, further comprising:
a rotation member gear at one end of the rotation member and engageable with the first gear; and
a filter gear on the first filter, adjacent to the rotation member gear, and engageable with the second gear.

9. The clothes dryer according to claim 4, wherein
the rotation member and the first filter are rotatable in different directions, and
the clothes dryer further includes a stopper configured to prevent the first filter from being rotated while the rotation member is rotated.

10. The clothes dryer according to claim 9, further comprising:
a housing configured to accommodate the rotation member, the first filter, and the second filter;
a cover above the housing to cover the housing; and
a stopper hole formed on one side of the cover and configured so that the stopper is insertable therein to thereby prevent the first filter from being rotated while the rotation member is rotated.

11. The clothes dryer according to claim 10, further comprising:
a lint box having a box door to open and close the lint box, on a side of the housing, and configured to collect lint, wherein
the motor is disposed on another side of the housing, and
the rotation member is configured to scrape the lint collected in the first filter off of the first filter and transfer the scrapped lint from the first filter to the lint box.

12. The clothes dryer according to claim 2, further comprising:
a heat exchanger configured so that air passed through the second filter passes through the heat exchanger and into the drum; and
a blocking member between the first filter and the second filter to prevent part of the air discharged through the exhaust port from passing through the heat exchanger without being filtered by the first filter and the second filter.

13. The clothes dryer according to claim 4, wherein
the first filter and the rotation member are rotated together by rotation of the rotation member due to a frictional force between the rotation member and the first filter as the rotation member is rotated, and,
as the first filter and the rotation member are rotated together, the first filter is rotated more slowly than the rotation member due to a frictional force between the cleaning member and the second filter as the first filter is rotated.

14. The clothes dryer according to claim 4, further comprising:
a rotation member gear at one end of the rotation member;
a filter gear on the first filter, adjacent to the rotation member gear, and having a larger number of teeth than the rotation member gear; and
a gear engageable with the rotation member gear and the filter gear, and configured to receive power from the motor and to transmit the received power to the first filter and the rotation member.

15. The clothes dryer according to claim 14, further comprising:
a motor gear including:
a first gear part configured to be engageable with the rotation member gear; and
a second gear part having a larger number of teeth than the first gear part, and configured to be engageable with the filter gear.
